# FASCICULE DE BREVET EUROPEEN

(11) **EP 1 625 764 B1**
(45) Date de publication et mention de la délivrance du brevet: **31.10.2018**
(21) Numéro de dépôt: 04767162.3
(22) Date de dépôt: 12.05.2004
(51) Int. Cl.: H04L 12/28, H04M 7/00, H04M 3/42, H04M 1/725, H04W 8/18, H04W 88/06

(54) **SYSTEME SANS FIL AYANT UNE INTERFACE UTILISATEUR MULTIMODALE CONFIGUREE DYNAMIQUEMENT SUR DES PREFERENCES UTILISATEURS**
DRAHTLOSES SYSTEM MIT EINER NACH BENUTZERVORLIEBE DYNAMISCH KONFIGURIERTEN BENUTZERSCHNITTSTELLE
WIRELESS SYSTEM WITH A MULTIMODE USER INTERFACE DYNAMICALLY CONFIGURABLE WITH USER PREFERENCES

(30) Priorité: 19.05.2003 US 440234
(43) Date de publication de la demande: 15.02.2006
(73) Titulaire: Orange, 75015 Paris (FR)
(72) Inventeur: PATEL, Ashish, Roajibhai, Sunnyvale, CA 94086 (US)
(86) Numéro de dépôt international: PCT/FR2004/001160
(87) Numéro de publication internationale: WO 2004/105415

(56) Documents cités:
- WO-A-02/13556

## Description

### ARRIERE PLAN TECHNOLOGIQUE DE L'INVENTION.

La présente invention est relative à un système de communication sans fil, et plus particulièrement à un système pour configurer dynamiquement une interface utilisateur multimodale d'un terminal portable basé sur des préférences utilisateurs pour faciliter la communication avec un appareil local.

Avec l'introduction de protocoles applicatifs sans fil tels que dans les réseaux 3G (UMTS, WCDMA) Bluetooth® et à fidélité sans fil (WI-FI) I.E.E.E.802.11, il n'y a apparemment aucune limite pour étendre l'emploi d'appareils électroniques portables de façon à interagir avec des appareils configurés sans fil rencontrés par un utilisateur. Un domaine dans lequel une telle interactivité est couramment mise en oeuvre et celle d'un réseau d'entreprise. Dans les réseaux Wifi, un ordinateur portable configuré de façon adéquat, un PDA ou un appareil portable du même type peut communiquer avec un réseau lorsqu'il est sous la couverture de signaux sans fil du réseau. De cette manière, un tel réseau comprendra des noeuds sans fil de sorte que les utilisateurs qui ont besoin d'avoir des stations de travail mobile peuvent maintenir un accès à des ressources d'entreprise basées sur des préférences personnelles depuis un ordinateur portable et / ou depuis un assistant numérique portable (PDA) basées sur ses préférences hébergées par un opérateur (filiale d'opérateur) de ce réseau.

Des appareils configurés pour accéder à de tels réseaux d'entreprise comprendront des interfaces de traitement de signaux réseaux et emploieront des protocoles d'authentification fédérés adéquats pour accéder / échanger des données sans fil avec le réseau. L'utilisateur utilisera typiquement des interfaces utilisateurs graphiques standard conformes avec des programmes applicatifs résidant dans une mémoire de l'appareil pour interagir avec les ressources ou fonctionnalités du réseau d'entreprise. Ainsi, comme les protocoles sans fil sont mis en oeuvre de façon croissante pour accéder aux technologies du réseau d'entreprise, un intense besoin d'interopérabilité et de coopération avec des appareils électroniques de chaque jour, se fait ressentir.

Actuellement, bien qu'utilisés d'une manière connue pour accéder à des réseaux, les capacités sans fil d'un appareil électronique portable, n'offrent pas couramment de flexibilité dans les communications avec des appareils rencontrés hors de l'environnement de l'entreprise. Par exemple, un utilisateur en voyage ayant un appareil électronique configuré pour des communications locales sans fil, par exemple, WIFI, Bluetooth ® et des réseaux cellulaires à distance 2,5 G, 3 G, rencontrant un équipement ne peut pas actuellement interagir avec l'équipement par les supports sans fil locaux. De plus, il est désirable d'interagir avec l'équipement au moyen d'une interface multimodal configurée dynamiquement de façon à présenter le contenu et les fonctionnalités de l'équipement dans un langage préférentiel ou en accord avec des préférences d'utilisateur.

En temps que tel, on procure ici un système sans fil dont la méthodologie relative est capable de distribuer et de configurer une interface utilisateur multimodale via un fournisseur de services réseau, remédiant aux limitations précédemment mentionnées, et capable de procurer des composants de cadre applicatif configurables et interopérables et déployables, qui aident dynamiquement à l'hébergement, à la reconnaissance et à la consommation de services d'équipement local.

Le document WO02/13556 montre un système pour générer des pages avec un contenu dynamique.

### SOMMAIRE DE L'INVENTION

Un exemple de mise en oeuvre de la présente invention procure un système sans fil qui emploie un réseau de fournisseurs de service, par exemple xDSL ou 2,5 G / 3 G pour procurer des communications avec un appareil local au moyen d'une interface utilisateurs multimodal. Le système configure dynamiquement l'interface utilisateur multimodal sur un terminal portable pour communiquer avec l'appareil local dans une configuration "pousser" (réception de données non sollicitées) avec méthodologie associée.

Un noeud d'appareil est lié opérationnellement avec l'appareil local et configuré pour transmettre des données au format de l'interface de l'appareil local pour une réception par le terminal portable lorsque celui-ci est dans un voisinage de transmission du noeud d'appareil. Le terminal portable émet une requête d'interface en réponse à la réception des données de format d'interface. Un noeud serveur est configuré pour recevoir la requête d'interface depuis le terminal portable de façon à identifier une interface utilisateur ou une préférence utilisateur basée sur des informations à délivrer au terminal portable pour être utilisé en interaction avec l'appareil. Le noeud serveur transmet l'interface utilisateur identifiée ou des informations qui aident à générer l'interface utilisateur localement sur le terminal portable et le terminal portable présente l'interface utilisateur où génère l'interface utilisateur basée sur les informations procurées à un utilisateur au moyen d'un écran du terminal portable de sorte que l'utilisateur peut inter réagir avec l'appareil en accord avec l'interface utilisateur identifiée.

Selon un autre aspect de l'invention, une topologie " tirer" (requête de données) avec méthodologie associée est employée pour configurer dynamiquement une interface utilisateur multimodal sur un terminal portable pour communiquer avec un appareil local.

Un noeud d'appareil lié opérationnellement à l'appareil local est configuré pour recevoir un signal de sélection du terminal portable quand le terminal portable est dans le voisinage du noeud d'appareil. L'appareil local réagit au signal de sélection de façon à émettre un signal d'identification vers le terminal portable. Le terminal portable en émet une requête de données de format d'interface compatible avec le signal d'identification. Un noeud serveur est configuré pour recevoir la requête de données d'interface du terminal portable de façon à identifier une interface utilisateur où des préférences utilisateur basées sur des informations à délivrer au terminal portable pour une utilisation en interaction avec l'appareil. Le noeud serveur transmet l'interface utilisateur identifiée où les informations qui aident à générer localement une interface utilisateur sur le terminal portable. Le terminal portable présente l'interface utilisateur où génère l'interface utilisateur basée sur les informations procurées, un utilisateur via un écran du terminal portable de sorte que l'utilisateur peut inter réagir avec l'appareil conformément à l'interface utilisateur identifié.

On comprendra que tant la description générale précédente que la description détaillée qui suit sont des exemples de l'invention mais ne sont pas limitatives.

### BREVE DESCRIPTION DES DESSINS

L'invention sera mieux appréciée et de nombreux avantages qui en résultent seront plus clairs en référence à la description détaillée suivante sous l'éclairage des dessins qui l'accompagnent dans lesquels :
La figure 1 est un schéma de réseau à haut niveau pour un système sans fil conforme à une mise en oeuvre particulière de l'invention ;
La figure 2 est un schéma de réseau à haut niveau pour un système sans fil ayant un portable mobile conforme à une mise en oeuvre particulière de l'invention ; et
La figure 3 est un schéma d'interopérabilité de composant logiciels décrivant l'interopérabilité de gestion logiciel d'un protocole d'application sans fil conforme à une mise en oeuvre particulière de l'invention.

### DESCRIPTION DETAILLEE DE L'INVENTION

Certains termes utilisés dans la description qui suit, le sont à titre de simple convenance et ne sont pas limitatifs. Le terme "appareil local" tel qu'il est utilisé ici renvoie à un dispositif électronique qui comprend des capacités sans fil de communiquer avec d'autres dispositifs sans fil et qui peut aussi avoir des capacités de communiquer avec des protocoles réseau, l'appareil local peut être physiquement localisé à toute distance des autres dispositifs sans fil capables d'échanger des données entre eux, la capacité d'établir des communications entre eux étant une fonction de la couverture de transmission, de la puissance et du protocole applicatif sans fil des dispositifs respectifs. Dans les dessins, les mêmes références numériques sont utilisées pour désigner les mêmes éléments dans toutes les figures.

### I. Approche fonctionnelle

La présente invention telle que divulguée dans l'exemple de la mise en oeuvre qui suit, procure un système sans fil qui emploie un réseau de fournisseur de service pour permettre une communication avec un appareil local au moyen d'une interface utilisateur multimodal. Dans l'exemple de mise en oeuvre, le réseau de fournisseurs de service est un réseau étendu et peut comprendre des composants non traditionnels tels que satellites, radio fréquence, service de réseau cellulaire, infrarouge et service réseau PCS pour servir de portails mobile aussi bien que des services de réseau traditionnels Internet tel que des services Wanadoo et Orange de France Télécom servant de portails matériels. Le système sans fil communique effectivement et consomme des services hébergés localement à travers une combinaison de technologies Bluetooth ®, RFID, Smart-Tags, Wi-Fi, JINI, service web en XLM léger (SOAP, UDDI, WSDL) et des protocoles assimilables à la toile et aux applications sans fil (WAP) qui sont connus de l'homme du métier.

En fonctionnement, basé sur des demandes et des préférences utilisateurs, le système sans fil permet de fournir dynamiquement des interfaces utilisateurs pour interagir avec des services locaux sur un terminal portable. Le système emploie des protocoles applicatifs sans fil et des technologies du commerce pour détecter et consommer des services locaux en utilisant des profils utilisateurs prédéfinis mis à disposition par le fournisseur de service. De cette façon, des composants de cadre applicatif sont définis qui permettent à un dispositif utilisateur portable de consommer et communiquer dynamiquement des services hébergés localement basés sur un profil utilisateur.

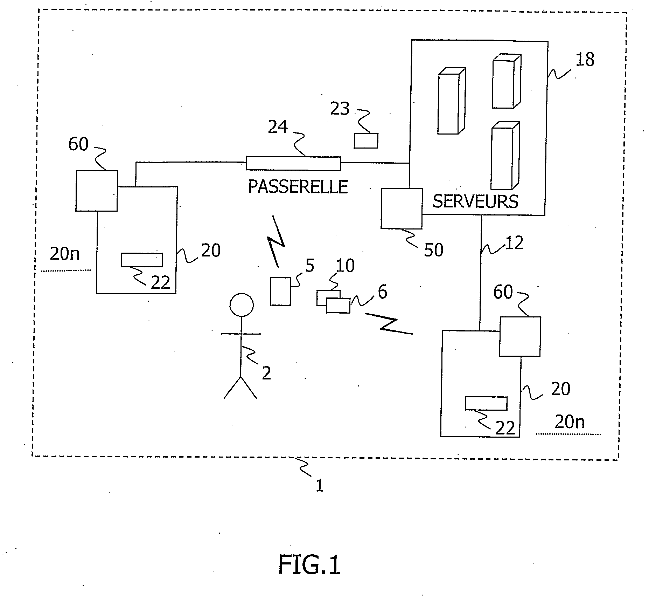

En référence à présent à la figure 1, un schéma réseau de système sans fil 1 est montré pour décrire des fonctionnalités de haut niveau de composant réseau conformément à un exemple de mise en oeuvre de l'invention. Dans le schéma de haut niveau de la figure 1, pour des questions de simplifications, on omet les fonctionnalités de serveur individuel et les composants traditionnels de réseau tels que des routeurs. Le schéma réseau comprend un terminal portable généralement désigné 5, des appareils 20 ayant des noeuds d'appareil 22, une passerelle 24 et un fournisseur de service généralement désigné 18.

Le terminal portable 5 est représenté par un assistant numérique personnel 5 ayant des applications logiciels côté client, comprenant un gestionnaire client d'accès sans fil généralement désigné 10, et un fichier de politiques 6. Dans l'exemple de mise en oeuvre le gestionnaire client 10 fonctionne comme une tâche de fond ou comme un démon et le fichier de politique 6 est un sous composant du gestionnaire client 10 d'accès portable, accédé à partir d'une mémoire du terminal portable 5 montré ici séparément pour illustrer la fonctionnalité individuelle. Alors que le portable du terminal 5 est décrit ici comme un assistant numérique personnel (PDA) dans un but de simplification, l'homme du métier comprend que la fonction du terminal portable 5 peut être mise en oeuvre par un nombre quelconque d'un dispositif électronique tel q'un ordinateur portable, un téléphone cellulaire, un lecteur audio portable, un dispositif de radio messagerie, un dispositif de navigation, un dispositif de jeux vidéo, ou tout dispositif semblable. Bien entendu, de tels dispositifs sont proposés à titre d'exemple illustratifs sans constituer une liste exhaustive. Dans de telles mises en oeuvre, des applications telles que la synchronisation de données, la messagerie unifiée et la mise à jour logiciel peuvent être employées comme partie de la plateforme gestionnaire client 10 d'accès portable pour rendre l'expérience d'accès portable plus transparente et robuste.

Comme discuté précédemment, le terminal portable 5 de l'exemple de mise en oeuvre est un PDA, bien entendu, un système d'exploitation adapté du terminal 5 fonctionne pour coopérer avec le gestionnaire client 10 de façon à permettre son exécution sur le terminal portable 5. Dans l'exemple de mise en oeuvre, un système d'exploitation basé sur une interface utilisateur graphique (GUI) est décrit pour être utilisé avec un écran de terminal portable 5, cependant d'autres systèmes d'exploitation peuvent être employés tels que des systèmes à reconnaissance vocale comme on en connaît dans l'état de la technologie. Par soucis de brièveté, on a omis la description de caractéristiques standards d'appareil tel que les mémoires locales volatiles et ou non volatiles, les entrées sorties, aussi bien que les composants matériels dont la description détaillée des opérations est bien connue de l'homme du métier. Le terminal portable 5 est employé par un utilisateur 2. Le terminal portable 5 est configuré pour échanger des données avec des appareils 20 et ou un fournisseur d'accès 18 via un portail mobile 14 ou un réseau traditionnel 12 tel que l'Internet pour se connecter au fournisseur de service 18.

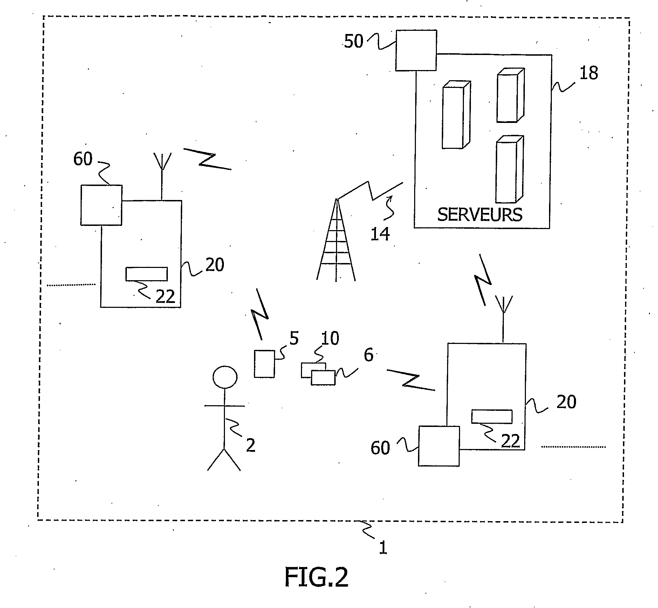

Dans l'exemple de mise en oeuvre, le fournisseur de service 18 peut être l'un des nombreux fournisseurs d'Internet (ISP). Le fournisseur de service 18 comprend un client 50 de gestionnaire serveur pour traiter les données de l'appareil 20 et du terminal portable 5 conformément à l'invention telle que décrite en détail ci-après. Alors que le fournisseur de service 18 est typiquement employé pour communiquer via une pile de protocole TCP/IP de façon à effectuer une communication avec un réseau 12, l'homme du métier comprend que toutes technologies alternatives de réseau sont également couvertes par l'enseignement de la présente invention. De même, on omet ici par soucis de brièveté, la description des programmes de protocoles HTTP et les procédés de requêtes DNS. De plus, les technologies de réseau décrites ici, alors qu'elles sont décrites et dépeintes partiellement comme des mises en oeuvre matériels, des mises en oeuvre sans fil, des liens satellites, et tout autre peuvent y être substitués comme montré sur la-figure 2. Bien-entendu, l'homme du métier comprend que tant le terminal portable 5 que l'appareil 20, peut communiquer via différents fournisseurs de service Internet pour transférer des données à différents gestionnaires serveurs 50.

Une passerelle 24 est illustrée sur la figure 1 pour représenter une mise en oeuvre de l'invention typiquement adaptée à la domotique. La passerelle de l'exemple de mise en oeuvre sert d'intermédiaire entre les composants réseau du domicile et le réseau 12 comme le sait l'homme du métier. Dans l'exemple de mise en oeuvre, la passerelle 24 emploie un gestionnaire client 23 pour échanger des données avec le protocole applicatif sans fil conformément à la présence invention, la passerelle 24 ou un boîtier de configuration (set-top-box) sont typiquement rencontrés dans des applications DSL ou à large bande. De plus, la passerelle 24 peut servir d'interface avec des technologies réseau à base domestique tels que Ethernet, I.E.E.E 1394 "firewire", HyperLAN et peut coopérer avec des protocoles tels que TCP/IP (DHCP, UpnP, etc...), HAVI et toute combinaison de ces solutions.

Des appareils locaux, généralement désignés 20, sont montrés avec des noeuds d'appareils 22. Les appareils locaux sont des dispositifs employant le protocole applicatif sans fil du terminal portable 5. Des exemples d'appareil conforme à l'invention comprennent des distributeurs automatiques, des bornes d'information telles qu'on en trouve dans les centres de voyage (aéroport, terminaux de bus ou de train, ou tout autre lieu). Les noeuds d'appareil 22 servent de point d'accès pour échanger des données au moyen du protocole applicatif sans fil. Alors que l'on a représenté les noeuds d'accès 22 localisés au voisinage des appareils 20, l'homme du métier comprend que ceux-ci peuvent être localisés à des positions éloignées des appareils 20 pour accroître les facultés de transmission réception. Dans l'exemple de mise en oeuvre de la figure 1, les appareils 20 sont opérationnellement liés au réseau 12 tel que l'internet pour échanger des données avec le fournisseur de service 18.

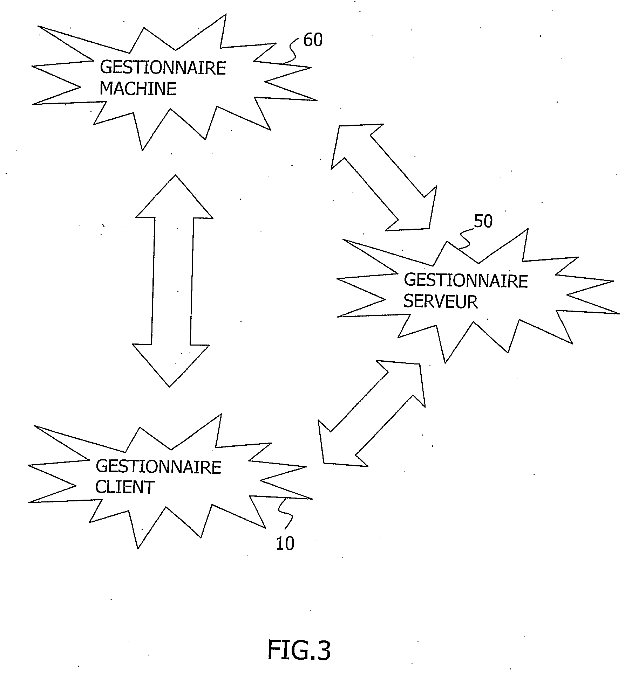

Comme montré sur la figure 3, l'architecture de haut niveau pour utiliser le système 1 conformément au protocole applicatif sans fil de la présente invention, comprend un gestionnaire client 10, un gestionnaire serveur 50 et un gestionnaire machine 60 pour illustrer leur fonctionnalité coopérative. On décrit maintenant un exemple d'interaction entre chacun des composants de gestion. Comme vu précédemment, le gestionnaire client 10 détecte ou reçoit (push or pull) la présence d'un appareil 20 et entame un échange initial d'information avec le gestionnaire machine 60. Le gestionnaire machine 60 procure au gestionnaire client 10, des informations primaires concernant l'appareil 20 correspondant en utilisant un format à base de standard ouvert. Le gestionnaire client interagit soit avec le composant de passerelle de la passerelle 24 (non montré) dans une mise en oeuvre telle qu'on en trouve chez soi (figure 1), soit avec le gestionnaire serveur 50 au moyen d'un portail mobile 14 ou d'une connexion réseau 12 (figure 2). De cette façon, un utilisateur 2 est capable de récupérer une interface utilisateur multimodale pour interagir avec l'appareil 20 ou d'employer des préférences utilisateurs dans un format standard de sorte que le gestionnaire machine 50 peut continuer le processus grâce à l'interface utilisateur pour accéder à des données ou à des fonctionnalités de l'appareil 20 au moyen du protocole applicatif sans fil. Ainsi, le gestionnaire machine 60 délivre les ordres voulus au gestionnaire client 10. Finalement, le gestionnaire client 10 délivre des informations transactionnelles éventuelles soit au composant de passerelles (non montré) ou au gestionnaire serveur 50 comme mentionné précédemment ou de façon autonome s'il n'a que des capacités locales sans fil.

Comme montré sur la figure 1, le gestionnaire client 10 réside sur le terminal portable 5 en compagnie des préférences utilisateur 6. Dans une mise en oeuvre alternative, les préférences utilisateur 6 peuvent être accédées à partir d'une mémoire du fournisseur de service 18 (non montrées). Le gestionnaire client -10 communique avec les appareils 20 et le portail mobile 14 ou le fournisseur de service applicatif via la connexion offerte par le fournisseur de service Internet 18. Le gestionnaire client 10 communique (pull) ou reçoit (push) des communications des appareils 20 dans le voisinage du terminal portable 5 par le protocole applicatif sans fil. Lorsque 2 ou plusieurs appareils communiquent avec le terminal portable 5, un affichage de sélection peut être présenté à l'utilisateur 2 pour identifier l'appareil 20 sélectionné et ainsi, procéder avec lui. Cette communication procure un échange initial d'information avec l'appareil 20 pour identifier le type requis d'information ou d'interface utilisateur de l'appareil 20. Dans l'exemple de mise en oeuvre, cette information peut comprendre un numéro de modèle, un numéro de série, nu constructeur, un code de type d'appareil. L'information est ensuite utilisée par le terminal portable 5 et procurer soit à la passerelle 24 dans le cas d'un réseau domestique, soit au gestionnaire serveur 50. L'interface utilisateur désirée (basée sur des entrées vocales ou textuelles) ou les informations à communiquer à l'appareil 20 sont obtenues à la passerelle 24 ou du gestionnaire serveur 50. Finalement, les informations transactionnelles du terminal portable 5 peuvent être procurées à la passerelle 24 ou au gestionnaire serveur 50 pour tracer l'interface utilisateur, les habitudes d'accès, les enregistrements d'achat à des fins de facturation.

Le gestionnaire passerelle 23 réside sur la passerelle 24 à la maison (figure 1). Le gestionnaire passerelle 23 communique avec le terminal portable 5 par protocole applicatif sans fil. Le gestionnaire passerelle 23 de la passerelle 24 obtient les informations relatives aux caractéristiques de l'appareil 20 depuis le terminal portable 5. Le gestionnaire passerelle 23 transfère ensuite les caractéristiques de l'appareil vers le gestionnaire serveur 50 et obtient du gestionnaire serveur 50, une interface utilisateur désirée pour permettre au terminal portable 5 d'interagir avec l'appareil 20. Finalement, les informations transactionnelles du terminal portable 5 peuvent être procurées au gestionnaire serveur 50.

Le gestionnaire serveur 50 réside chez le fournisseur de service 18 et communique vers la passerelle 24 sur le réseau 12 ou vers le terminal portable 5 par le protocole applicatif sans fil via le portail mobile 14. Le gestionnaire serveur 50 obtient les caractéristiques de l'appareil à partir soit de la passerelle 24 par le réseau DSL soit à partir du terminal portable 5 par le protocole applicatif sans fil. Le gestionnaire serveur 50 procure une interface utilisateur désirée ou requiert les informations de préférence utilisateur soit à destination de la passerelle 24 soit à destination du terminal portable 5. Finalement, le gestionnaire serveur 50 peut enregistrer les informations transactionnelles envoyées par la passerelle 24 ou par le terminal portable 5 sous forme d'intelligence marketing ou d'enregistrements d'achat à des fins de facturation.

Le gestionnaire machine 60 réside sur l'appareil 20 ou sur le noeud d'appareil 22 pour communiquer avec le terminal portable 5 par le protocole applicatif . sans fil de façon à procurer des fonctionnalités supplémentaires en plus des fonctions générales réalisées par l'appareil 20 conformément à un exemple de mise en oeuvre d'invention. Le gestionnaire machine 60 procure des caractéristiques de machine dans un format donné à destination du terminal portable 5 (par exemple : données XML) permettant d'identifier quel type d'interface utilisateur ou d'information l'appareil 20 nécessite de façon à autoriser un traitement ultérieur en interaction à un terminal portable 5 une fois que l'interface utilisateur désiré a été configurée.

### II. Configuration interface utilisateur

Dans l'exemple de mise en oeuvre, le gestionnaire client 10 peut opérer dans l'une ou l'autre des configurations pousser ou tirer. Dans la configuration pousser, le terminal portable 5 reçoit des transmissions depuis les appareils 20 dans le voisinage. Dans la configuration tirer, le terminal portable transmet un signal de sélection pour repérer des appareils 20 dans le voisinage.

En référence maintenant aux figures 1 et 2 dans la configuration pousser, un noeud d'appareil 22 de l'appareil local est configuré pour transmettre des données de format d'interface de l'appareil local 20 -en vue de réception par le terminal portable 5 alors dans le voisinage de transmission du noeud d'appareil 22. En réponse, le terminal portable 5 transmet une requête d'interface en réponse à la réception des données de format d'interface à l'un ou l'autre d'un portail mobile 14 ou de l'appareil 20. Le fournisseur de service 18 est configuré pour recevoir la requête d'interface depuis le terminal portable 5 au moyen du portail mobile 14 ou de l'appareil 20 via le réseau 12. Le fournisseur de service 18 identifie -une interface utilisateur ou les informations qui aident à générer une interface utilisateur sur le terminal portable 5 en vue d'une utilisation interactive avec l'appareil 20. Dans l'exemple de mise en oeuvre, le serveur 18 délivre une interface utilisateur au terminal portable 5 en accord avec les données de format d'interface et l'interface utilisateur ou les informations qui aident à générer localement une interface utilisateur sur le terminal portable 5 peuvent être optimisées sur le terminal portable 5 par des préférences utilisateur enregistrées localement. Dans une mise en oeuvre alternative, l'interface utilisateur peut être optimisée en accord avec des préférences utilisateur enregistrées sur le lieu du fournisseur de service avant d'être délivré au terminal portable 5. L'interface utilisateur est ensuite configurée sur le terminal portable 5 au moyen d'un écran du terminal portable de façon à permettre à l'utilisateur d'interagir avec l'appareil en accord avec l'interface utilisateur identifiée.

Dans une configuration alternative pousser, plutôt que de transmettre une requête d'interface en réponse à la réception d'un signal poussé depuis le noeud d'appareil 22, le terminal portable 5 peut simplement recevoir des paramètres de l'appareil 22. Par exemple, si un utilisateur 2 est dans le voisinage d'un appareil aéroportuaire de réservation, il peut recevoir des informations relatives à l'heure d'arrivée ou de départ d'un vol spécifique en accord avec des données de vol enregistrées localement dans le terminal portable 5 en temps que préférence utilisateur ou avec des données de vol utilisateur enregistrées du côté du fournisseur de service. Dans cette mise en oeuvre, le terminal portable 5 ne fournirait aucune communication à l'appareil 22.

Dans la configuration tirer, un noeud d'appareil 22 d'un appareil local 20 est configuré pour recevoir un signal de sélection du terminal portable 5 quand le terminal portable 5 est dans le voisinage du noeud d'appareil 22. L'appareil local 20 réagit au signal de sélection pour transmettre un signal d'identification vers le terminal portable 5. Le terminal portable transmet une requête de données de format d'interface en accord avec le signal d'identification soit au portail mobile 14 soit à l'appareil 20. Le fournisseur de service 18 est configuré pour recevoir la requête de données de format d'interface du terminal portable 5 au moyen du portail mobile 14 ou du réseau 12 de façon à identifier une interface utilisateur en vue d'une utilisation interactive avec l'appareil 20. Dans l'exemple de mise en oeuvre, le serveur 18 délivre une interface utilisateur ou les informations qui aident à générer localement une interface utilisateur sur le terminal portable 5 à destination du terminal portable 5 en accord avec des données de format d'interface. L'interface utilisateur ou les informations qui aident à générer localement l'interface utilisateur sur le terminal portable 5, peuvent être optimisées sur le terminal portable 5 par des préférence utilisateur enregistrées localement. Dans une mise en oeuvre alternative, l'interface utilisateur peut être optimisée en accord avec des préférences utilisateur enregistrées sur le lieu du fournisseur de service avant d'être délivré au terminal portable 5. L'interface utilisateur est ensuite configurée sur le terminal portable 5 via un écran du terminal portable de sorte que l'utilisateur peut interagir avec l'appareil en accord avec l'interface utilisateur identifiée.

Que ce soit dans la configuration pousser ou tirer, la communication procurée au fournisseur de service 18 peut, de plus, échanger avec le fournisseur d'accès 18, des données d'identification (identité d'utilisateur ou d'appareil, mot de passe) en accord avec un protocole d'authentification fédéré pour identifier l'utilisateur 2 et/ou l'appareil 20. L'homme du métier reconnaîtra que de nombreuses méthodes d'authentification peuvent être employées dans l'exemple de mise en oeuvre de l'invention, comprenant sans aucune limitation le Protocole d'Authentification à Relever de Défit (CHAP pour Challange Handshake Authentication Protocol), Protocole d'authentification CHAP et un mot de passe (PAP) et cadre d'authentification basé sur le langage SAML PAP. On connaît le langage SAML comme étant celui pour exprimer la sécurité sous forme d'assertions concernant des sujets.

Dans une mise en oeuvre alternative, l'utilisateur 2 peut procurer des données d'appareils ou de transactions rencontrés à destination du fournisseur de service 18 qui sont enregistrées localement dans le terminal portable 5 dans des services à valeur ajoutée, d'échanges pour compensation ou de ristourne du fournisseur de service 18. De façon similaire, l'utilisateur 2 peut recevoir des crédits du fournisseur de service 18, en échange des données de transaction à utiliser pour des services en relation avec la consommation de l'appareil. Bien entendu, les utilisateurs désirant protéger leur intimité, peuvent avoir l'option de désactiver cette caractéristique au moyen d'un gestionnaire client 10.

Ainsi, comme on peut l'apprécier à partir de la précédente description de la figure 1, un utilisateur 2 peut interagir avec les appareils 20 au domicile ou sur des aires publics à l'aide de son terminal portable 5. Par exemple, au domicile, on peut procurer à l'utilisateur 2, un menu sur le terminal portable 5 pour interagir avec les appareils domotiques basés sur la présence de l'utilisateur 2 dans une pièce particulière, ou l'utilisateur 2 pourrait obtenir une interface utilisateur pour un appareil nouvellement acheté. Basé de plus sur des préférences utilisateur enregistrées dans le terminal portable 5 ou chez le fournisseur de service 18 (date de naissance, vacances, anniversaire de mariage), on configurerait un menu approprié pour l'utilisateur 2.

Comme montré également dans la configuration de la figure 2, un utilisateur 2 en voyage pourrait interagir avec des appareils 20 tels que présentés. Par exemple, en entrant chez un loueur de voiture, le terminal portable 5 récupérerait les préférence utilisateur du portail mobile 14, ou les préférences utilisateur enregistrées localement et, utilisant les préférences de voiture tels que l'ajustement du siège, la station radio, la température, etc... , ajuste les appareils 20 de la voiture conformément en communiquant avec une passerelle présente dans la voiture qui en retour envoie des signaux au détecteur offrant des facilités d'ajustement de siège ou similaire. De façon similaire, dans une gare d'autobus ou de chemin de fer, un utilisateur 2 peut acheter un ticket sur un appareil 20 distributeur en utilisant une interface utilisateur procurée au terminal portable 5 dans un langage préférentiel. En dehors de la maison, par exemple en se déplaçant dans un aéroport, l'utilisateur 2 peut accéder à des informations relatives à des horaires de vol, des portes d'embarquement via le terminal portable 5 en interagissant avec des appareils locaux 20 employant le protocole applicatif sans fil conforme à la présente invention basée sur ses informations de vol enregistrées sur le terminal portable 5 ou auprès du fournisseur de service 18. Une mise en oeuvre supplémentaire permettrait à l'utilisateur 2 d'obtenir des informations sur le menu de différents restaurants, sur son terminal portable 5 en accédant à des appareils locaux 20 basés sur ses préférences alimentaires enregistrées dans le terminal portable 5 ou auprès du fournisseur de service 18.

Evidemment, on peut discerner par simple lecture que différentes modifications et variations de la présente invention sont rendues possibles par l'enseignement ci-dessus. On doit donc comprendre que dans le cadre des revendications jointes, l'invention peut être réalisée autrement que spécifiquement décrite ci-dessus. Par exemple, alors que décrite en terme tant de composant logiciel et matériel coopérant entre eux, on indique que le système décrit ici peut être réalisé intégralement en logiciel. Le logiciel peut être incorporé sur un support tel qu'un disque optique ou magnétique, une onde porteuse à radio fréquence ou à audio fréquence.

Ainsi, l'exposé précédent divulgue et décrit simplement un exemple de mise en oeuvre de la présente invention. Comme le comprendra l'homme du métier, la présente invention peut être mise en oeuvre sous d'autres formes spécifiques sans sortir de l'esprit ou des caractéristiques essentielles précédentes. C'est pourquoi, la divulgation de la présente invention est supposée illustrative sans limiter l'étendue de l'invention autrement que par les revendications.

## Revendications

1. Système sans fil pour configurer dynamiquement une interface utilisateur multimodale sur un terminal portable de façon à communiquer avec un appareil local, comprenant :
un noeud d'appareil lié opérationnellement à l'appareil local et configuré pour transmettre des données de format d'interface de l'appareil local à destination du terminal portable lorsque dans le voisinage du noeud d'appareil, le terminal portable émettant une requête d'interface en réponse à la réception des données de format d'interface ;
un noeud serveur configuré pour recevoir la requête d'interface depuis le terminal portable de façon à identifier une interface utilisateur ou des informations basées sur une préférence utilisateur à délivrer au terminal portable en vue d'une utilisation interactive avec l'appareil, le noeud serveur transmettant les informations pour générer l'interface utilisateur ou l'interface utilisateur identifiée à destination du terminal portable et le terminal portable présentant l'interface utilisateur ou générant l'interface utilisateur basée sur les informations de préférence utilisateur à l'utilisateur via un écran du terminal portable de façon à permettre à l'utilisateur d'interagir avec l'appareil conformément à l'interface utilisateur identifié.

2. Système selon la revendication 1, dans lequel l'interface utilisateur identifié est configuré sur le terminal portable conformément à des préférences utilisateur pré déterminées.

3. Système selon la revendication 1 dans lequel le terminal portable présente à l'utilisateur un menu de sélection sur l'écran quand dans le voisinage d'au moins deux appareils pour permettre à l'utilisateur de sélectionner l'un des au moins deux appareils transmettant une requête d'interface.

4. Système selon la revendication 1 dans lequel le terminal portable comprend de plus : un gestionnaire client pour recevoir et transmettre des données entre le terminal portable, le noeud d'appareil et le noeud serveur.

5. Système selon la revendication 4, dans lequel te gestionnaire client procure des préférences utilisateur au noeud serveur à utiliser dans la sélection de l'interface utilisateur.

6. Système selon la revendication 1, comprenant de plus :
un noeud passerelle pour recevoir les données de format transmises depuis le terminal portable de façon à procurer les données de format transmises au noeud serveur et pour recevoir l'interface utilisateur identifiée depuis le noeud serveur en vue d'alimenter le terminal portable.

7. Système selon la revendication 2, dans lequel les données de préférence enregistrées sur le terminal portable comprennent un langage préféré de l'utilisateur pour présenter l'interface utilisateur dans le langage préféré.

8. Système selon la revendication 1, dans lequel les données d'interface sont transmises conformément au standard I. E. E. E. 802.11 de fidélité sans fil (WI-FI).

9. Système sans fil pour configurer dynamiquement une interface utilisateur multimodale sur un terminal portable de façon à communiquer avec un appareil local, comprenant :
un noeud d'appareil lié opérationnellement à l'appareil local et configuré pour recevoir un signal de sélection du terminal portable quand le terminal portable est au voisinage du noeud d'appareil, l'appareil local réagissant au signal de sélection pour transmettre un signal d'identification au terminal portable, le terminal portable transmettant une requête de données de format d'interface en accord avec le signal d'identification ;
un noeud serveur configuré pour recevoir la requête de données d'interface en provenance du terminal portable de façon à identifier une interface utilisateur ou des informations basées sur une préférence utilisateur pour livraison au terminal portable de façon à interagir avec l'appareil, le noeud serveur transmettant l'interface utilisateur identifiée ou les informations pour générer l'interface utilisateur à destination du terminal portable et le terminal portable présentant l'interface utilisateur ou générant l'interface utilisateur basée sur des informations de préférence utilisateur à un utilisateur au moyen d'un écran du terminal portable par lequel l'utilisateur peut interagir avec l'appareil conformément à l'interface utilisateur identifiée.

10. Système selon la revendication 9, dans lequel l'interface utilisateur identifiée est configurée sur le terminal portable en accord avec des préférences utilisateur prédéterminées.

11. Système selon la revendication 9, dans lequel le terminal portable présente à l'utilisateur un menu de sélection sur l'écran lorsque dans le voisinage d'au moins deux appareils de façon à permettre à l'utilisateur de sélectionner l'un des au moins deux appareils transmettant une requête d'interface.

12. Système selon la revendication 9, dans lequel le terminal portable comprend de plus :
un gestionnaire client pour recevoir et transmettre des données entre le terminal portable, le noeud d'appareil, et le noeud serveur.

13. Système selon ta revendication 12, dans lequel le gestionnaire client procure des préférences utilisateur au noeud serveur à utiliser dans la sélection de l'interface utilisateur.

14. Système selon la revendication 9, comprenant de plus :
un noeud passerelle pour recevoir les données de format transmises depuis le terminal portable de façon à alimenter le noeud serveur avec les données de format transmises et pour recevoir l'interface utilisateur identifiée depuis le noeud serveur de façon à alimenter le terminal portable.

15. Système selon la revendication 10, dans lequel les données de préférence enregistrées sur le terminal portable comprennent un langage préféré de l'utilisateur pour présenter l'interface utilisateur dans le langage préféré.

16. Système selon la revendication 9, dans lequel les données d'interface sont transmises conformément au standard I. E. E. E. 802.11 de fidélité sans fil (WI-FI).

17. Méthode pour configurer dynamiquement une interface utilisateur multimodale sur un terminal portable en vue d'une communication avec un appareil local basé sur des préférences utilisateur, comprenant des étapes consistant à :
transmettre des données de format d'interface depuis un noeud d'appareil lié opérationnellement à l'appareil local ;
recevoir des données de format d'interface sur le terminal portable lorsque dans le voisinage du noeud d'appareil ;
transmettre une requête d'interface depuis le terminal portable en réponse à la réception des données de format d'interface ;
recevoir la requête d'interface depuis le terminal portable sur un noeud serveur pour identifier une interface utilisateur ou des informations basées sur des préférences utilisateur à livrer au terminal portable pour une utilisation interactive avec l'appareil ;
transmettre depuis le noeud serveur l'interface utilisateur ou les informations pour générer l'interface utilisateur vers le terminal portable ; et
présenter l'interface utilisateur ou générer l'interface utilisateur basée sur des informations de préférence utilisateur à un utilisateur via un écran du terminal portable de façon à permettre à l'utilisateur d'interagir avec l'appareil en accord avec l'interface utilisateur identifiée.

18. Méthode selon la revendication 17, comprenant de plus l'étape consistant à :
demander à l'utilisateur via le terminal portable d'opter pour une transmission de données de transaction vers un noeud serveur à la fin de l'interaction avec l'appareil.

19. Méthode pour configurer dynamiquement une interface utilisateur multimodale sur un terminal portable en vue d'une communication avec un appareil local basé sur des préférences utilisateur, comprenant les étapes consistant à :
recevoir un signal de sélection du terminal portable sur un noeud d'appareil lié opérationnellement à l'appareil local lorsque le terminal local est dans le voisinage du noeud d'appareil ;
transmettre un signal d'identification à destination du terminal portable ;
transmettre une requête de données de format d'interface à partir du terminal portable en accord avec le signal d'identification ;
recevoir la requête de données de format d'interface provenant du terminal portable sur un noeud serveur pour identifier une interface utilisateur ou des informations basées sur des préférences utilisateur à livrer au terminal portable en vue d'une utilisation interactive avec l'appareil ;
transmettre l'interface utilisateur identifiée ou les informations pour générer l'interface utilisateur depuis le noeud serveur vers le terminal portable ; et
présenter l'interface utilisateur à l'utilisateur via un écran du terminal portable pour permettre à l'utilisateur d'interagir avec l'appareil en accord avec l'interface utilisateur identifié.

20. Méthode selon la revendication 19, comprenant de plus l'étape consistant à :
demander à l'utilisateur au moyen du terminal portable d'opter pour une transmission de données de transaction transmises au noeud serveur à la fin de l'interaction avec l'appareil.

21. Support lisible par ordinateur comprenant des instructions de programme d'ordinateur qui ordonne à un ordinateur de configurer dynamiquement une interface utilisateur multimodale sur un terminal portable en vue d'une communication avec un appareil local, support comprenant des instructions pour :
transmettre des données de format d'interface depuis un noeud d'appareil lié opérationnellement à l'appareil local ;
recevoir des données de format d'interface sur le terminal portable lorsque dans le voisinage du noeud d'appareil ;
transmettre une requête d'interface depuis le terminal portable en réponse à la réception des données de format d'interface ;
recevoir la requête d'interface depuis le terminal portable sur un noeud serveur pour identifier une interface utilisateur ou des informations basées sur des préférences utilisateur à livrer au terminal portable pour une utilisation interactive avec l'appareil ;
transmettre depuis le noeud serveur l'interface utilisateur ou les informations pour générer l'interface utilisateur vers le terminal portable ; et
présenter l'interface utilisateur ou générer l'interface utilisateur basée sur des informations de préférence utilisateur à un utilisateur via un écran du terminal portable de façon à permettre à l'utilisateur d'interagir avec l'appareil en accord avec l'interface utilisateur identifiée.

22. Support lisible par ordinateur comprenant des instructions de programme d'ordinateur qui ordonne à un ordinateur de configurer dynamiquement une interface utilisateur multimodale sur un terminal portable en vue d'une communication avec un appareil local, support comprenant des instructions pour :
recevoir un signal de sélection du terminal portable sur un noeud d'appareil lié opérationnellement à l'appareil local lorsque le terminal local est dans le voisinage du noeud d'appareil ;
transmettre un signal d'identification à destination du terminal portable ;
transmettre une requête de données de format d'interface à partir du terminal portable en accord avec le signal d'identification ;
recevoir la requête de données de format d'interface provenant du terminal portable sur un noeud serveur pour identifier une interface utilisateur ou des informations basées sur des préférences utilisateur à livrer au terminal portable en vue d'une utilisation interactive avec l'appareil;
transmettre l'interface utilisateur identifiée ou les informations pour générer l'interface utilisateur depuis le noeud serveur vers le terminal portable ; et
présenter l'interface utilisateur à l'utilisateur via un écran du terminal portable pour permettre à l'utilisateur d'interagir avec l'appareil en accord avec l'interface utilisateur identifié.

## Patentansprüche

1. Drahtloses System, um eine multimodale Benutzerschnittstelle auf einem tragbaren Endgerät dynamisch zu konfigurieren, um mit einer lokalen Vorrichtung zu kommunizieren, umfassend:
einen Vorrichtungsknoten, der mit der lokalen Vorrichtung wirkverbunden ist und konfiguriert ist, Daten im Schnittstellenformat der lokalen Vorrichtung an das tragbare Endgerät zu übertragen, wenn in der Nähe des Vorrichtungsknotens, wobei das tragbare Endgerät eine Schnittstellenanforderung in Reaktion auf den Empfang der Daten im Schnittstellenformat sendet;
einen Serverknoten, der konfiguriert ist, die Schnittstellenanforderung von dem tragbaren Endgerät aus zu empfangen, um eine Benutzerschnittstelle oder Informationen auf Grundlage einer Benutzervorliebe zu identifizieren, die zwecks einer interaktiven Nutzung mit der Vorrichtung an das tragbare Endgerät zu liefern sind, wobei der Serverknoten die Informationen, um die Benutzerschnittstelle zu erzeugen, oder die identifizierte Benutzerschnittstelle an das tragbare Endgerät überträgt und das tragbare Endgerät über einen Bildschirm des tragbaren Endgeräts dem Benutzer die Benutzerschnittstelle präsentiert oder die Benutzerschnittstelle auf Grundlage der Benutzervorliebensinformationen erzeugt, um es dem Benutzer zu gestatten, entsprechend der identifizierten Benutzerschnittstelle mit der Vorrichtung zu interagieren.

2. System nach Anspruch 1, wobei die identifizierte Benutzerschnittstelle auf dem tragbaren Endgerät entsprechend vorbestimmter Benutzervorlieben konfiguriert ist.

3. System nach Anspruch 1, wobei das tragbare Endgerät dem Benutzer ein Auswahlmenü auf dem Bildschirm präsentiert, wenn in der Nähe mindestens zweier Vorrichtungen, um es dem Benutzer zu gestatten, eine der mindestens zwei Vorrichtungen auszuwählen, die eine Schnittstellenanforderung übertragen.

4. System nach Anspruch 1, wobei das tragbare Endgerät außerdem Folgendes umfasst:
einen Client-Manager, um Daten zwischen dem tragbaren Endgerät, dem Vorrichtungsknoten und dem Serverknoten zu empfangen und zu übertragen.

5. System nach Anspruch 4, wobei der Client-Manager dem Serverknoten Benutzervorlieben beschafft, die in der Auswahl der Benutzerschnittstelle zu nutzen sind.

6. System nach Anspruch 1, außerdem umfassend:
einen Gateway-Knoten, um die Daten im Format zu empfangen, die von dem tragbaren Endgerät aus übertragen werden, um die übertragenen Daten im Format dem Serverknoten zu beschaffen und um die identifizierte Benutzerschnittstelle von dem Serverknoten aus zu empfangen, um das tragbare Endgerät zu versorgen.

7. System nach Anspruch 2, wobei die Vorliebensdaten, die auf dem tragbaren Endgerät gespeichert sind, eine bevorzugte Sprache des Benutzers umfassen, um die Benutzerschnittstelle in der bevorzugten Sprache zu präsentieren.

8. System nach Anspruch 1, wobei die Schnittstellendaten entsprechend der Wireless-Fidelity-(WI-FI-) Norm I.E.E.E.802.11 übertragen werden.

9. Drahtloses System, um eine multimodale Benutzerschnittstelle auf einem tragbaren Endgerät dynamisch zu konfigurieren, um mit einer lokalen Vorrichtung zu kommunizieren, umfassend:
einen Vorrichtungsknoten, der mit der lokalen Vorrichtung wirkverbunden ist und konfiguriert ist, ein Auswahlsignal des tragbaren Endgeräts zu empfangen, wenn sich das tragbare Endgerät in der Nähe des Vorrichtungsknotens befindet, wobei die lokale Vorrichtung auf das Auswahlsignal reagiert, um ein Identifikationssignal an das tragbare Endgerät zu übertragen, wobei das tragbare Endgerät eine Anforderung von Daten im Schnittstellenformat in Übereinstimmung mit dem Identifikationssignal überträgt;
einen Serverknoten, der konfiguriert ist, die Anforderung von Schnittstellendaten von dem tragbaren Endgerät zu empfangen, um eine Benutzerschnittstelle oder Informationen auf Grundlage einer Benutzervorliebe für die Lieferung an das tragbare Endgerät, um mit der Vorrichtung zu interagieren, zu identifizieren, wobei der Serverknoten die identifizierte Benutzerschnittstelle oder die Informationen, um die Benutzerschnittstelle zu erzeugen, an das tragbare Endgerät überträgt und das tragbare Endgerät mittels eines Bildschirms des tragbaren Endgeräts, durch welchen der Benutzer entsprechend der identifizierten Benutzerschnittstelle mit der Vorrichtung interagieren kann, einem Benutzer die Benutzerschnittstelle präsentiert oder die Benutzerschnittstelle auf Grundlage von Benutzervorliebensinformationen erzeugt.

10. System nach Anspruch 9, wobei die identifizierte Benutzerschnittstelle auf dem tragbaren Endgerät in Übereinstimmung mit vorbestimmten Benutzervorlieben konfiguriert ist.

11. System nach Anspruch 9, wobei das tragbare Endgerät dem Benutzer ein Auswahlmenü auf dem Bildschirm präsentiert, wenn in der Nähe mindestens zweier Vorrichtungen, um es dem Benutzer zu gestatten, eine der mindestens zwei Vorrichtungen, die eine Schnittstellenanforderung übertragen, zu wählen.

12. System nach Anspruch 9, wobei das tragbare Endgerät außerdem Folgendes umfasst:
einen Client-Manager, um Daten zwischen dem tragbaren Endgerät, dem Vorrichtungsknoten und dem Serverknoten zu empfangen und zu übertragen.

13. System nach Anspruch 12, wobei der Client-Manager dem Serverknoten Benutzervorlieben beschafft, die in der Auswahl der Benutzerschnittstelle zu nutzen sind.

14. System nach Anspruch 9, außerdem umfassend:
einen Gateway-Knoten, um die Daten im Format zu empfangen, die von dem tragbaren Endgerät aus übertragen werden, um den Serverknoten mit den übertragenen Daten im Format zu versorgen und um die identifizierte Benutzerschnittstelle von dem Serverknoten zu empfangen, um das tragbare Endgerät zu versorgen.

15. System nach Anspruch 10, wobei die Vorliebensdaten, die auf dem tragbaren Endgerät gespeichert sind, eine bevorzugte Sprache des Benutzers umfassen, um die Benutzerschnittstelle in der bevorzugten Sprache zu präsentieren.

16. System nach Anspruch 9, wobei die Schnittstellendaten entsprechend der Wireless-Fidelity-(WI-FI-) Norm I.E.E.E.802.11 übertragen werden.

17. Verfahren zum dynamischen Konfigurieren einer multimodalen Benutzerschnittstelle auf einem tragbaren Endgerät zwecks einer Kommunikation mit einer lokalen Vorrichtung auf Grundlage von Benutzervorlieben, das Schritte umfasst, die aus Folgendem bestehen:
Übertragen von Daten im Schnittstellenformat von einem Vorrichtungsknoten aus, der mit der lokalen Vorrichtung wirkverbunden ist;
Empfangen von Daten im Schnittstellenformat auf dem tragbaren Endgerät, wenn in der Nähe des Vorrichtungsknotens;
Übertragen einer Schnittstellenanforderung von dem tragbaren Endgerät aus in Reaktion auf den Empfang der Daten im Schnittstellenformat;
Empfangen der Schnittstellenanforderung von dem tragbaren Endgerät aus auf einem Serverknoten, um eine Benutzerschnittstelle oder Informationen auf Grundlage von Benutzervorlieben, die für eine interaktive Nutzung mit der Vorrichtung an das tragbare Endgerät zu liefern sind, zu identifizieren;
Übertragen der Benutzerschnittstelle oder der Informationen, um die Benutzerschnittstelle zu erzeugen, von dem Serverknoten aus zum tragbaren Endgerät; und
einem Benutzer über einen Bildschirm des tragbaren Endgeräts die Benutzerschnittstelle präsentieren oder die Benutzerschnittstelle auf Grundlage von Benutzervorliebensinformationen erzeugen, um es dem Benutzer zu gestatten, mit der Vorrichtung in Übereinstimmung mit der identifizierten Benutzerschnittstelle zu interagieren.

18. Verfahren nach Anspruch 17, außerdem umfassend den Schritt, der aus Folgendem besteht:
den Benutzer über das tragbare Endgerät bitten, eine Übertragung von Transaktionsdaten zu einem Serverknoten am Ende der Interaktion mit der Vorrichtung zu wählen.

19. Verfahren zum dynamischen Konfigurieren einer multimodalen Benutzerschnittstelle auf einem tragbaren Endgerät zwecks einer Kommunikation mit einer lokalen Vorrichtung auf Grundlage von Benutzervorlieben, das die Schritte umfasst, die aus Folgendem bestehen:
Empfangen eines Auswahlsignals des tragbaren Endgeräts auf einem Vorrichtungsknoten, der mit der lokalen Vorrichtung wirkverbunden ist, wenn sich das lokale Endgerät in der Nähe des Vorrichtungsknotens befindet;
Übertragen eines Identifikationssignals an das tragbare Endgerät;
Übertragen einer Anforderung von Daten im Schnittstellenformat von dem tragbaren Endgerät aus in Übereinstimmung mit dem Identifikationssignal;
Empfangen der Anforderung von Daten im Schnittstellenformat von dem tragbaren Endgerät auf einem Serverknoten, um eine Benutzerschnittstelle oder Informationen auf Grundlage von Benutzervorlieben, die zwecks einer interaktiven Nutzung mit der Vorrichtung an das tragbare Endgerät zu liefern sind, zu identifizieren;
Übertragen der identifizierten Benutzerschnittstelle oder der Informationen, um die Benutzerschnittstelle zu erzeugen, von dem Serverknoten aus zum tragbaren Endgerät; und
dem Benutzer über einen Bildschirm des tragbaren Endgeräts die Benutzerschnittstelle präsentieren, um es dem Benutzer zu gestatten, in Übereinstimmung mit der identifizierten Benutzerschnittstelle mit der Vorrichtung zu interagieren.

20. Verfahren nach Anspruch 19, außerdem umfassend den Schritt, der aus Folgendem besteht:
den Benutzer mittels des tragbaren Endgeräts bitten, eine Übertragung von Transaktionsdaten, die am Ende der Interaktion mit der Vorrichtung an den Serverknoten übertragen werden, zu wählen.

21. Computerlesbares Medium, umfassend Anweisungen eines Computerprogramms, das einen Computer anweist, eine multimodale Benutzerschnittstelle auf einem tragbaren Endgerät zwecks einer Kommunikation mit einer lokalen Vorrichtung dynamisch zu konfigurieren, das Medium umfassend Anweisungen, um:
Daten im Schnittstellenformat von einem Vorrichtungsknoten aus zu übertragen, der mit der lokalen Vorrichtung wirkverbunden ist;
Daten im Schnittstellenformat auf dem tragbaren Endgerät zu empfangen, wenn in der Nähe des Vorrichtungsknotens;
eine Schnittstellenanforderung von dem tragbaren Endgerät aus in Reaktion auf den Empfang der Daten im Schnittstellenformat zu übertragen;
die Schnittstellenanforderung von dem tragbaren Endgerät aus auf einem Serverknoten zu empfangen, um eine Benutzerschnittstelle oder Informationen auf Grundlage von Benutzervorlieben, die für eine interaktive Nutzung mit der Vorrichtung an das tragbare Endgerät zu liefern sind, zu identifizieren;
die Benutzerschnittstelle oder die Informationen, um die Benutzerschnittstelle zu erzeugen, von dem Serverknoten aus zum tragbaren Endgerät zu übertragen; und
einem Benutzer über einen Bildschirm des tragbaren Endgeräts die Benutzerschnittstelle zu präsentieren oder die Benutzerschnittstelle auf Grundlage von Benutzervorliebensinformationen zu erzeugen, um es dem Benutzer zu gestatten, mit der Vorrichtung in Übereinstimmung mit der identifizierten Benutzerschnittstelle zu interagieren.

22. Computerlesbares Medium, umfassend Anweisungen eines Computerprogramms, das einen Computer anweist, eine multimodale Benutzerschnittstelle auf einem tragbaren Endgerät zwecks einer Kommunikation mit einer lokalen Vorrichtung dynamisch zu konfigurieren, das Medium umfassend Anweisungen, um:
ein Auswahlsignal des tragbaren Endgeräts auf einem Vorrichtungsknoten zu empfangen, der mit der lokalen Vorrichtung wirkverbunden ist, wenn sich das lokale Endgerät in der Nähe des Vorrichtungsknotens befindet;
ein Identifikationssignal an das tragbare Endgerät zu übertragen;
eine Anforderung von Daten im Schnittstellenformat von dem tragbaren Endgerät aus in Übereinstimmung mit dem Identifikationssignal zu übertragen;
die Anforderung von Daten im Schnittstellenformat von dem tragbaren Endgerät auf einem Serverknoten zu empfangen, um eine Benutzerschnittstelle oder Informationen auf Grundlage von Benutzervorlieben, die zwecks einer interaktiven Nutzung mit der Vorrichtung an das tragbare Endgerät zu liefern sind, zu identifizieren;
die identifizierte Benutzerschnittstelle oder die Informationen, um die Benutzerschnittstelle zu erzeugen, von dem Serverknoten aus zum tragbaren Endgerät zu übertragen; und
dem Benutzer über einen Bildschirm des tragbaren Endgeräts die Benutzerschnittstelle zu präsentieren, um es dem Benutzer zu gestatten, in Übereinstimmung mit der identifizierten Benutzerschnittstelle mit der Vorrichtung zu interagieren.

## Claims

1. Wireless system for dynamically configuring a multimode user interface on a portable terminal in such a way as to communicate with a local apparatus, comprising:
an apparatus node tied operationally to the local apparatus and configured to transmit interface format data of the local apparatus destined for the portable terminal when in the vicinity of the apparatus node, the portable terminal emitting an interface request in response to the reception of the interface format data;
a server node configured to receive the interface request from the portable terminal so as to identify a user interface or information based on a user preference to be delivered to the portable terminal with a view to an interactive use with the apparatus, the server node transmitting to the portable terminal the information so as to generate the user interface or the user interface identified and the portable terminal presenting the user interface or generating the user interface based on the user preference information to the user via a screen of the portable terminal in such a way as to allow the user to interact with the apparatus in accordance with the user interface identified.

2. System according to Claim 1, in which the user interface identified is configured on the portable terminal in accordance with pre-determined user preferences.

3. System according to Claim 1, in which the portable terminal presents the user with a selection menu on the screen when in the vicinity of at least two apparatuses so as to allow the user to select one of the at least two apparatuses transmitting an interface request.

4. System according to Claim 1, in which the portable terminal moreover comprises:
a client manager for receiving and transmitting data between the portable terminal, the apparatus node and the server node.

5. System according to Claim 4, in which the client manager provides user preferences to the server node to be used in the selection of the user interface.

6. System according to Claim 1, moreover comprising:
a gateway node for receiving the format data transmitted from the portable terminal so as to provide the format data transmitted to the server node and for receiving the user interface identified from the server node with a view to supplying the portable terminal.

7. System according to Claim 2, in which the preference data recorded on the portable terminal comprise a preferred language of the user so as to present the user interface in the preferred language.

8. System according to Claim 1, in which the interface data are transmitted in accordance with the wireless fidelity (WI-FI) standard I.E.E.E.802.11.

9. Wireless system for dynamically configuring a multimode user interface on a portable terminal in such a way as to communicate with a local apparatus, comprising:
an apparatus node tied operationally to the local apparatus and configured to receive a selection signal from the portable terminal when the portable terminal is in the vicinity of the apparatus node, the local apparatus reacting to the selection signal so as to transmit an identification signal to the portable terminal, the portable terminal transmitting a request for interface format data in accord with the identification signal;
a server node configured to receive the request for interface data originating from the portable terminal so as to identify a user interface or information based on a user preference for delivery to the portable terminal in such a way as to interact with the apparatus, the server node transmitting to the portable terminal the user interface identified or the information to generate the user interface and the portable terminal presenting the user interface or generating the user interface based on user preference information to a user by means of a screen of the portable terminal by which the user can interact with the apparatus in accordance with the user interface identified.

10. System according to Claim 9, in which the user interface identified is configured on the portable terminal in accord with predetermined user preferences.

11. System according to Claim 9, in which the portable terminal presents the user with a selection menu on the screen when in the vicinity of at least two apparatuses so as to allow the user to select one of the at least two apparatuses transmitting an interface request.

12. System according to Claim 9, in which the portable terminal moreover comprises:
a client manager for receiving and transmitting data between the portable terminal, the apparatus node, and the server node.

13. System according to Claim 12, in which the client manager provides user preferences to the server node to be used in the selection of the user interface.

14. System according to Claim 9, moreover comprising:
a gateway node for receiving the format data transmitted from the portable terminal so as to supply the server node with the format data transmitted and for receiving the user interface identified from the server node so as to supply the portable terminal.

15. System according to Claim 10, in which the preference data recorded on the portable terminal comprise a preferred language of the user so as to present the user interface in the preferred language.

16. System according to Claim 9, in which the interface data are transmitted in accordance with the wireless fidelity (WI-FI) standard I.E.E.E.802.11.

17. Method for dynamically configuring a multimode user interface on a portable terminal with a view to a communication with a local apparatus based on user preferences, comprising steps consisting in:
transmitting interface format data from an apparatus node tied operationally to the local apparatus;
receiving interface format data on the portable terminal when in the vicinity of the apparatus node;
transmitting an interface request from the portable terminal in response to the reception of the interface format data;
receiving the interface request from the portable terminal on a server node so as to identify a user interface or information based on user preferences to be delivered to the portable terminal for an interactive use with the apparatus;
transmitting from the server node the user interface or the information to generate the user interface to the portable terminal; and
presenting the user interface or generating the user interface based on user preference information to a user via a screen of the portable terminal in such a way as to allow the user to interact with the apparatus in accord with the user interface identified.

18. Method according to Claim 17, moreover comprising the step consisting in:
asking the user via the portable terminal to opt for a transmission of transaction data to a server node at the end of the interaction with the apparatus.

19. Method for dynamically configuring a multimode user interface on a portable terminal with a view to a communication with a local apparatus based on user preferences, comprising the steps consisting in:
receiving a selection signal from the portable terminal on an apparatus node tied operationally to the local apparatus when the local terminal is in the vicinity of the apparatus node;
transmitting an identification signal destined for the portable terminal;
transmitting a request for interface format data from the portable terminal in accord with the identification signal;
receiving the request for interface format data originating from the portable terminal on a server node so as to identify a user interface or information based on user preferences to be delivered to the portable terminal with a view to an interactive use with the apparatus;
transmitting the user interface identified or the information to generate the user interface from the server node to the portable terminal; and
presenting the user interface to the user via a screen of the portable terminal so as to allow the user to interact with the apparatus in accord with the user interface identified.

20. Method according to Claim 19, moreover comprising the step consisting in:
asking the user by means of the portable terminal to opt for a transmission of transaction data transmitted to the server node at the end of the interaction with the apparatus.

21. Medium readable by computer comprising computer program instructions which orders a computer to dynamically configure a multimode user interface on a portable terminal with a view to a communication with a local apparatus, medium comprising instructions for:
transmitting interface format data from an apparatus node tied operationally to the local apparatus;
receiving interface format data on the portable terminal when in the vicinity of the apparatus node;
transmitting an interface request from the portable terminal in response to the reception of the interface format data;
receiving the interface request from the portable terminal on a server node so as to identify a user interface or information based on user preferences to be delivered to the portable terminal for an interactive use with the apparatus;
transmitting from the server node the user interface or the information to generate the user interface to the portable terminal; and
presenting the user interface or generating the user interface based on user preference information to a user via a screen of the portable terminal in such a way as to allow the user to interact with the apparatus in accord with the user interface identified.

22. Medium readable by computer comprising computer program instructions which orders a computer to dynamically configure a multimode user interface on a portable terminal with a view to a communication with a local apparatus, medium comprising instructions for:
receiving a selection signal from the portable terminal on an apparatus node tied operationally to the local apparatus when the local terminal is in the vicinity of the apparatus node;
transmitting an identification signal destined for the portable terminal;
transmitting a request for interface format data from the portable terminal in accord with the identification signal;
receiving the request for interface format data originating from the portable terminal on a server node so as to identify a user interface or information based on user preferences to be delivered to the portable terminal with a view to an interactive use with the apparatus;
transmitting the user interface identified or the information for generating the user interface from the server node to the portable terminal; and
presenting the user interface to the user via a screen of the portable terminal so as to allow the user to interact with the apparatus in accord with the user interface identified.
